# EUROPÄISCHE PATENTANMELDUNG

(11) **EP 0 853 163 A2**
(43) Veröffentlichungstag der Anmeldung: **15.07.1998**
(21) Anmeldenummer: 98100284.3
(22) Anmeldetag: 09.01.1998
(51) Int. Cl.: E03F 1/00, E03F 5/10

(54) **Versickerungseinrichtung**

(30) Priorität: 14.01.1997 DE 19700985
(71) Anmelder: Fränkische Rohrwerke Gebr. Kirchner GmbH & Co., 97486 Königsberg/Bayern (DE)
(72) Erfinder: Heemeier, Benjamin, 32457 Porta Westfalica (DE)
(74) Vertreter: Muschke, Markus Artur Heinz

(57) **Zusammenfassung**

Die Erfindung betrifft eine Versickerungseinrichtung mit einem Behälter (10,110), der einen Zulauf (12,112), gegebenenfalls einen Überlauf und einen Ablauf (16,116) aufweist, wobei der freie Strömungsquerschnitt des Ablaufs veränderbar ist. Erfindungsgemäß wird eine Stelleinrichtung (20,120) vorgesehen, die sich zwischen dem Abfluß und einem oberen Bereich des Behälters (10,110) erstreckt, wobei die Stelleinrichtung (20,120) in Verbindung zu einem Regelorgan (18,118) zur Veränderung des Strömungsquerschnittes des Abflusses steht.

## Beschreibung

Die Erfindung betrifft eine Versickerungseinrichtung mit einem Behälter mit einem Zulauf, einem Abfluß, und gegebenenfalls einem Überlauf, wobei der freie Strömungsquerschnitt des Ablaufs veränderbar ist, gemäß dem Oberbegriff des Patentanspruchs 1.

Gerade in jüngerer Zeit tritt immer häufiger das Problem von Überschwemmungen aufgrund der Bebauung von Erdoberflächen und der Begradigung von Flußläufen auf. Ausschlaggebend hierbei ist, daß durch die Versiegelung von Oberflächen, beispielsweise durch Straßen, durch Gebäude, durch geteerte oder gepflasterte Plätze usw., eine zunehmend geringe Oberfläche zur Verfügung steht, um anfallende Niederschläge oder Tauwasser aufzunehmen. Damit ist die Möglichkeit, Wasser in dem Untergrund versickern zu lassen, beschnitten.

Dies führt in immer größerem Maße dazu, daß Wasser über die Kanalisation in Abwassersysteme eingeleitet wird und diese überschwemmt. Dabei kann das saubere Regenwasser die Nährstoffdichte im Abwasser soweit herabsetzen, daß das im übrigen verschmutzte Abwasser kaum noch ohne eine zusätzliche Behandlung, beispielsweise eine Aufkonzentration der enthaltenen Abfallstoffe oder dergleichen, weiter verarbeitet werden kann.

Die Einleitung von Regenwasser in Flüsse und Kanäle, die begradigt und befestigt worden sind, führt darüber hinaus zur Erhöhung des Hochwasserrisikos und damit der Gefahr von Überschwemmungen.

Um den genannten Problemen Abhilfe zu verschaffen, ist ein System entwickelt worden, bei dem eine Versickerungseinrichtung gemäß dem Oberbegriff des Patentanspruchs 1 zum Einsatz gelangt. Dabei wird in einem Kanalisationsschacht ein Behälter, der als Anstauregelorgan bezeichnet wird, vorgesehen. Diese Versickerungseinrichtung, bzw. Anstauregelorgan weist einen Zulauf, einen Abfluß, und einen Überlauf auf. Der Abfluß läßt sich mit Drosseleinrichtungen unterschiedlicher Art bestücken, um einen geregelten Abfluß zu erzielen. Der Zulauf ist an ein Wasserreservoir angeschlossen, beispielsweise ein mit Kies oder Grobkies aufgefülltes Volumen, das an den natürlichen Boden einer vorgegebenen Landschaftsumgebung anschließt.

Treten nun größere Niederschläge auf, so versickern diese Niederschläge im Erdreich und werden von dem mit Kies gefüllten Volumen aufgenommen. In das mit Kies gefüllte Volumen können auch Rohre, beispielsweise von einer Dachentwässerung eines Gebäudes einmünden.

Das mit Kies gefüllte Volumen, auch Kiesrigole genannt, fließt dann mit Wasser voll und ein mit voneinander beabstandeten Öffnungen versehenes Rohr am unteren Bereich des Volumens kann über die vorhandenen Öffnungen Wasser aufnehmen, um dieses über einen Zulauf in die Versickerungseinrichtung einzuleiten, über deren Abfluß das Regenwasser gedrosselt in einen Schacht abgegeben werden kann, der an ein Kanalisationssystem anschließt. Dabei kann die Drosselung des Abflusses so vorgenommen werden, daß sie nur das übermäßig vorhandene Wasser ableitet, das von dem natürlichen Untergrund unterhalb des Volumens nicht aufgenommen werden kann, beispielsweise weil der natürliche Untergrund nur eine beschränkte Durchlässigkeit hat oder der Wasserandrang zu groß ist. Die Versickerungseinrichtung weist dabei einen Überlauf auf, der dafür sorgt, daß bei einem übermäßigen Niederschlagsanfall das Volumen nicht mit einem übermäßigen Wasserandrang beansprucht wird, sondern der übermäßige Wasserandrang über den Überlauf in den Schacht und anschließend in die nächste Rigole bzw. nach der letzten Rigole in einen Vorfluter abgelassen werden kann.

Hierbei tritt das Problem auf, däß sich die Abflußcharakteristik bei dieser Art der Entwässerung nicht einstellen läßt. Um die Abflußcharakteristik bei dieser bekannten Art der Entwässerung zu ändern, wäre es erforderlich, die Abflußdrossel auszutauschen.

Es ist die Aufgabe der vorliegenden Erfindung, eine Versickerungseinrichtung bereitzustellen, die eine Regulierung der Abflußcharakteristiken ermöglicht.

Diese Aufgabe wird durch eine Versickerungseinrichtung bzw. ein Anstauregelorgan mit den im Patentanspruch 1 aufgeführten Merkmalen gelöst. Zweckmäßige Ausführungsformen der erfindungsgemäßen Versickerungseinrichtung werden durch die in den Unteransprüchen aufgeführten Merkmale definiert.

Die gemäß der vorliegenden Erfindung zu erzielenden Vorteile beruhen darauf, daß ein Regelorgan bzw. ein Verschlußglied zur Veränderung des Strömungsquerschnitts am bzw. im Abfluß vorgesehen ist, wobei die Stellung dieses Regelorgans zur Veränderung des Strömungsquerschnitts des Abflusses über eine Stelleinrichtung betätigt werden kann. Dabei reicht die Stelleinrichtung zwischen dem Abfluß bzw. dem Regelorgan und einem oberen Bereich des Behälters.

Die Erstreckung der Stelleinrichtung sollte bevorzugt bis in einen oberen Bereich des Behälters vorgesehen sein, der in etwa wenigstens der maximalen Befüllung des Behälters entspricht. Natürlich kann sich die Stelleinrichtung auch weiter erstrecken, beispielsweise bis über einen eventuell oben an dem Behälter der Versickerungseinrichtung angeordneten Überlauf. Auch kann sich die Stelleinrichtung bis an eine Mündung eines Schachtes, insbesondere eines Kontroll- oder Drosselschachtes erstrecken, um von dort aus relativ bequem eine Manipulation zu ermöglichen.

Um eine gezielte und kontrollierte Einstellung des Strömungsquerschnittes des Abflusses vornehmen zu können, ist es von Vorteil, wenn am oberen Bereich der Versickerungseinrichtung bzw. des Schachtes ein Stellelement vorgesehen ist, beispielsweise ein Sternengriff oder dergleichen, das mit der Stelleinrichtung verbunden ist, um auf das Regelorgan einwirken zu können. Dabei kann das Stellelement bzw. die Stelleinrichtung mit einem Gewinde oder dergleichen versehen sein, um die Stelleinrichtung und damit das Regelorgan entsprechend der vorgenommenen Verstellung des Stellelements in seiner Position im Abfluß bzw. am Abfluß zu verändern, so daß der Strömungsquerschnitt eingestellt wird.

Bevorzugt ist eine Anzeigeeinrichtung vorgesehen, mit der der Grad der Öffnung des Abflusses bzw. die Größe des Strömungsquerschnittes angezeigt werden kann. Diese Anzeigeeinrichtung kann im einfachsten Falle als Markierung an der Stelleinrichtung oder dem Stellelement vorgesehen sein. In einer vorteilhaft ausgestatteten Ausführungsform kann die Anzeigeeinrichtung in Form eines Anzeigestiftes gut sichtbar im Bereich des Stellelementes bzw. der Stelleinrichtung am oberen Bereich des Behälters angeordnet sein und sich parallel oder proportional zu dem Stellelement bzw. der Stelleinrichtung bewegbar an den betreffenden Bestandteilen vorgesehen sein.

Dabei kann an der Stelleinrichtung, beispielsweise einer Stange, bevorzugt mit einem Gewindeabschnitt, oder einer Gewindestange oder dergleichen, eine Stoppscheibe angeordnet sein, die ein Herausdrehen oder gegebenenfalls ein Hereindrehen oder Einführen bzw. Herausführen der Stelleinrichtung in der Weise, daß das Regelorgan bzw. Verschlußglied sich in dem Abfluß verklemmt, verhindert, indem der Verstellweg für das Regelorgan begrenzt wird. Dabei kann an dieser Stoppscheibe gleichzeitig die Anzeigeeinrichtung befestigt sein.

Bevorzugt kann der Ablauf am Boden des Behälters vorgesehen sein. In diesem Falle kann das Regelorgan bzw. Verschlußglied einen zunehmenden Umfang haben bzw. einen abnehmenden Umfang haben, insbesondere kegel- oder trapezförmig ausgebildet sein, und zwar dementsprechend, inwieweit das Regelorgan zur Regelung des Strömungsquerschnittes durch den Ablauf aufwärts oder abwärts zu bewegen ist.

Es ist auch möglich, das Regelorgan als Platte vorzusehen, die durch Betätigung des Stellorgans ganz oder teilweise vor den Abfluß verschwerkbar ist. Dabei kann beispielsweise ein Anzeigestift zur Anzeige des Öffnungsgrades des Abflusses beweglich vorgesehen sein und über eine Kurvenscheibe auf- und abbewegt werden, je nach dem Öffnungsgrad des Abflusses.

Ferner kann eine bevorzugte Ausführungsform gemäß der Erfindung darin gesehen werden, daß der Ablauf im unteren Bereich des Behälters in der Wand vorgesehen ist bzw. der Ablauf in Form eines durch die Wand des Behälters bzw. der Versickerungseinrichtung hindurchragenden Rohrabschnittes ausgebildet ist.

Bei einer derartigen Ausführungsform kann das Regelorgan in Form eines Sperrschiebers oder dergleichen vorgesehen sein. Dieser kann über die Stelleinrichtung, zusätzliche Führungen an dem Abfluß oder dergleichen geführt werden und ansonsten prinzipiell in der gleichen Weise betätigt werden, wie zuvor erörtert worden ist. Sollte der Sperrschieber in einer Führung aufgenommen sein, die dem Sperrschieber genügend Reibung zur Verfügung stellt, um den Sperrschieber in einer bestimmten Stellung zu halten, so brauchen keine Gewinde oder dergleichen an der Stelleinrichtung vorgesehen zu werden. Bevorzugt weist der Abfluß bei der letzteren Ausführungsform einen kleinen Abstand zum Boden des Behälters auf, damit keine Hindernisse am Sperrschieber eine Bewegung des Sperrschiebers blockieren können, beispielsweise Steine oder dergleichen. Natürlich können in diesem Bereich auch Filtereinrichtungen vorgesehen werden, um eine Blockierung zu vermeiden

Die vorgenannten Ausführungsformen, wie auch die nachfolgend erörterten Ausführungsformen weisen auch den Vorteil auf, daß eine Prüfüng des freien Strömungsquerschnittes auch möglich ist, ohne den Abfluß bzw. den freien Strömungsquerschnitt selbst unmittelbar sehen zu können, wobei die Stellung der Stelleinrichtung bzw. des Stellelements und/oder der Anzeigeeinrichtung eine wesentliche Rolle spielen können.

Besondere Stabilität ist zu erwarten, wenn die Stelleinrichtung in Form einer Stange oder dergleichen vorgesehen ist. Die Stelleinrichtung kann auch als Draht, Seil oder dergleichen ausgebildet sein, um das Regelorgan in den Abfluß zu ziehen oder abzusenken.

Eine besonders bevorzugte Ausführungsform ergibt sich, wenn die Stelleinrichtung an einen Regelabschnitt angeschlossen ist. Dieser Regelabschnitt kann die Stellung des Regelorgans entsprechend dem Wasserstand im Behälter verändern. Dabei soll die Stellung des Regelorgans mit zunehmendem Wasserstand derart erfolgen können, daß das Regelorgan in die Abflußöffnung hinein versetzt wird, um den freien Strömungsquerschnitt der Abflußöffnung einzuengen oder diesen sogar vollständig zu verschließen. Bei einem geringen Wasserstand oder überhaupt keinem Wasser soll der Regelabschnitt das Regelorgan bzw. Verschlußglied maximal aus dem Bereich des Abflusses entfernen, um den Abfluß soweit als möglich freizugeben.

Bevorzugt kann der Regelabschnitt einen Schwimmkörper aufweisen, der an der Stelleinrichtung angreift und diese entsprechend dem Wasserstand im Behälter bzw. in der Versickerungseinrichtung bewegt, um das Regelorgan bzw. Verschlußglied in seiner Stellung im oder am Abfluß zu verändern.

Dabei ist es besonders bevorzugt, daß der Schwimmkörper über einen an der Stelleinrichtung angreifenden Hebel, eine Schwinge oder dergleichen oder unmittelbar an der Stelleinrichtung angreift. Im Falle der Verwendung eines Hebels kann dieser in einem Schwenkgelenk an der Rigolenwandung abgestützt sein und mit der Stelleinrichtung bzw. dem Regelorgan über ein weiteres Drehgelenk, ein Langloch oder dergleichen verbunden sein, wobei an dem der Wandung der Versickerungseinrichtung gegenüberliegenden Ende der Schwimmkörper angeordnet ist. Steigt nun der Wasserstand innerhalb der Rigole bzw. der Versickerungseinrichtung, so geht der Schwimmkörper nach oben und nimmt die Einstelleinrichtung mit, wodurch das Regelorgan, beispielsweise ein kegelförmiger Verschlußkörper, von unten in den Abfluß eingeführt wird und den freien Strömungsquerschnitt des Abflusses verkleinert. Sinkt der Wasserstand wieder, fällt der Schwimmer und damit auch das Regelorgan nach unten und erweitert den freien Strömungsquerschnitt des Ablaufs.

Es versteht sich, daß sich an dieser Stelle diverse verschiedene Hebel und Senkmechanismen mittels Hebeln und dergleichen in Verbindung mit einem Schwimmkörper erdenken lassen, wie sie beispielsweise in einer Toilettenspülung verwendet werden. Auch derartige verschiedene Mechaniken fallen unter die lehren gemäß der vorliegenden Erfindung.

Bevorzugt wird ein Schacht vorgesehen, in dem die erfindungsgemäße Versickerungseinrichtung bzw. Anstauregelorgan in einer vorgebbaren Höhe angeordnet werden kann. Dabei wird der Abfluß der Rohrrigole als Zulauf des Schachtes bzw. des Anstauregelorganes verwendet. Der Schacht weist einen eigenen Abfluß auf, der beispielsweise in die nächste Rigole bzw. nach der letzten Rigole in einen Vorfluter einmünden kann.

Bevorzugt ist der Behälter ein Kunststoffwellrohr, das bevorzugt mit einer glatten Innenwand versehen ist. Diese Art von Konstruktion verspricht ausreichende Stabilität und Beständigkeit. Natürlich kann der Behälter auch aus Steingut, glatten Kunststoffrohren, Beton, Stahl oder dergleichen mehr ausgebildet sein. Bevorzugt wird der Behälter halbmondartig hergestellt. Durch den sich dadurch ergebenden Raumgewinn zwischen Schachtinnenwand und Behälter wird eine eventuell notwendig werdende Reinigung der Sammelleitung durch den Schacht ohne Ausbau des Anstauregelorganes ermöglicht.

Auch der Schacht selbst kann als Kunststoffwellrohr mit vorzugsweise glatter Innenwand ausgebildet sein, so daß ein derartiger Schacht besonders leicht transportierbar und einbaubar ist, da er wenig Eigengewicht aufweist. Natürlich kann die erfindungsgemäße Versickerungseinrichtung auch in einen Betonschacht eingebaut werden.

Vor bzw. im Zulauf der erfindungsgemäß ausgebildeten Versickerungseinrichtung kann ein Filter angeordnet sein, beispielsweise ein Kiesfilter oder ein Gewebefilter, um es zu verhindern, daß Steine, Mineralien oder dergleichen in die Versickerungseinrichtung hineingeschwemmt werden können. Dadurch soll verhindert werden, daß eine Verstopfung bzw. ein Zusetzen des Filters geschehen kann. Der Filter kann bevorzugt von außen erreichbar angeordnet werden, etwa wenn der Filter als Gewebefilter in einem Rahmen im Bereich des Zulaufs innerhalb der Versickerungseinrichtung angeordnet wird. Bevorzugt weist auch hier die Versickerungseinrichtung einen Überlauf auf, so daß bei einem besonders großen Wasseranfall bzw. besonders großen Niederschlägen oder während der Schneeschmelze auch Überschußmengen an Wasser problemlos bewältigt werden können, indem diese ungedrosselt über den besagten Überlauf in die Kanalisation eingeleitet werden können.

Nachfolgend wird die vorliegende Erfindung anhand zweier bevorzugter Ausführungsformen unter Bezugnahme auf die anliegenden Darstellungen näher erläutert, wobei weitere Aufgaben, Merkmale und Vorteile gemäß der vorliegenden Erfindung offenbart werden. In den Darstellungen zeigen:
- Fig. 1: eine erste Ausführungsform einer erfindungsgemäßen Versickerungseinrichtung in einer längsschnittlichen Darstellung; und
- Fig. 2: eine erfindungsgemäß ausgebildete Versickerungseinrichtung in einer Fig. 1 entsprechenden Darstellungsform.

In den Figuren sind gleiche bzw. wenigstens funktionsgleiche Bestandteile mit um Dekaden erhöhten Bezugsziffern versehen (beispielsweise 20 gleich 120).

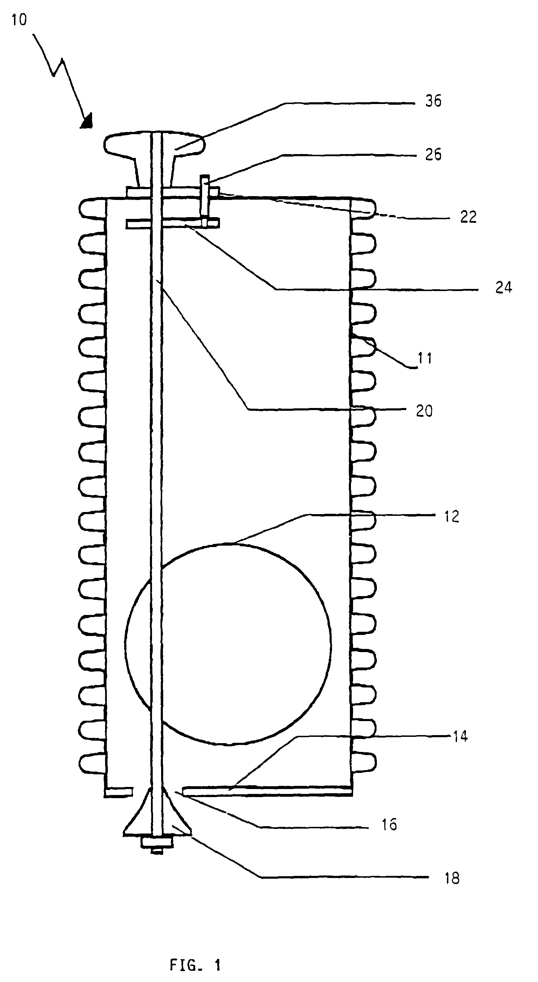

Die Fig. 1 zeigt eine allgemein mit dem Bezugszeichen 10 gekennzeichnete Versickerungseinrichtung bzw. Anstauregelorgan, wie sie bzw. es beispielsweise in einen Betonschacht, einen Kunststoffschacht oder dergleichen eingebaut werden kann.

Die Versickerungseinrichtung bzw. das Anstauregelorgan 10 weist einen zylindrischen Behälter 11 auf, in dem sich Wasser stauen kann, wobei zu bemerken ist, daß gemäß der Erfindung nur unverschmutzte Abwässer, wie etwa Niederschläge oder dergleichen, gemäß der Erfindung behandelt werden sollten.

Der Behälter 11 der Versickerungseinrichtung 10 weist einen Zulauf 12 und einen Ablauf 16 auf. Der Ablauf 16 ist am Boden 14 des Behälters 11 angeordnet. Der Behälter weist ein innen glattwandiges Wellrohr auf, an dem unten der Boden 14 befestigt ist, beispielsweise durch Verkleben, Verschrauben, Verschweißen oder dergleichen. Die Versickerungseinrichtung oder Bestandteile hiervon können auch durch Spritzgießen hergestellt werden.

Eine Zulauföffnung 12 ist etwas oberhalb des Bodens 14 vorgesehen. An diesen Zulauf kann ein Rohr anschließen, über das sauberes Wasser beispielsweise aus einer Kiesrigole, zur Ansammlung von Niederschlägen, in die Versickerungseinrichtung eingeführt werden. Ein derartiges Rohr kann mit Löchern bzw. Schlitzen versehen sein bzw. auch mit Kies oder dergleichen oder einem Filter versehen sein. Dabei kann die Anordnung, über die Wasser von der Umwelt in die erfindungsgemäße Versickerungseinrichtung eingeleitet wird, prinzipiell gleichermaßen aufgebaut sein, wie eingangs für den Stand der Technik erläutert worden ist. Allerdings ist es auch möglich, beispielsweise einen Sammelschacht oder dergleichen etwa für die Sammlung von Regenwasser von Dachflächen oder dergleichen vor dem Zulauf der erfindungsgemäßen Versickerungseinrichtung bzw. Anstauregelorgans anzuordnen. Prinzipiell kann jede Art von Wasser- bzw. Niederschlagssammeleinrichtung für prinzipiell sauberes Wasser vor der erfindungsgemäßen Versickerungseinrichtung angeordnet werden, wenn verhindert werden soll, daß überschüssiges Wasser ungehemmt in die nächste Rigole bzw. nach der letzten Rigole in einen Vorfluter eingeleitet werden kann.

In dem vorliegenden Ausführungsbeispiel einer Versickerungseinrichtung bzw. eines Anstauregelorgans 10 ist das Verschlußglied 18, hier ein Verschlußkegel 18, über eine Stange 20 mit einem Stellorgan 36, im vorliegenden Fall einem Sternengriff, verbunden. Der Sternengriff 36 ist am oberen Abschnitt der Rigole 10 auf ein Widerlager 22 aufgesetzt, um einem Anpreßdruck besser widerstehen zu können bzw. um innerhalb des Materials des Widerlagers Raum für ein Gewinde zu schaffen, das als Gegengewinde über einen Abschnitt an der Stange 20 vorgesehen sein kann, der sich zwischen einer Stockscheibe 24 und dem Sternengriff 36 erstrecken kann. Durch Verdrehen des Sternengriffs 36 kann über das besagte Gewinde (nicht dargestellt) die Stange 20 nach oben bzw. nach unten vorangetrieben werden, wodurch der Kegelverschluß 18 den Abschluß 16 verschließt bzw. freigibt. Die Stoppscheibe 24 kann mit einem Anzeigestift 26 versehen sein, der entsprechend der Lage der Stoppscheibe 24, die vorzugsweise fix an der Stange 20 vorgesehen ist, zu erkennen gibt, welche Stellung der Verschlußkegel 18 gegenüber dem Abfluß 16 hat. Hierdurch ergibt sich ein Maß für den freien Strömungsquerschnitt durch den Abfluß 16.

Die Stange 20 kann prinzipiell beliebig verlängert werden, so daß der Sternengriff 36, der Anzeigestift 26, das Widerlager 22 sowie die Stoppscheibe 24 andernorts, z.B. an der oberen Abdeckung oder unmittelbar darunter eines Kontrollschachtes, Sammelschachtes oder dergleichen, zugänglich ist.

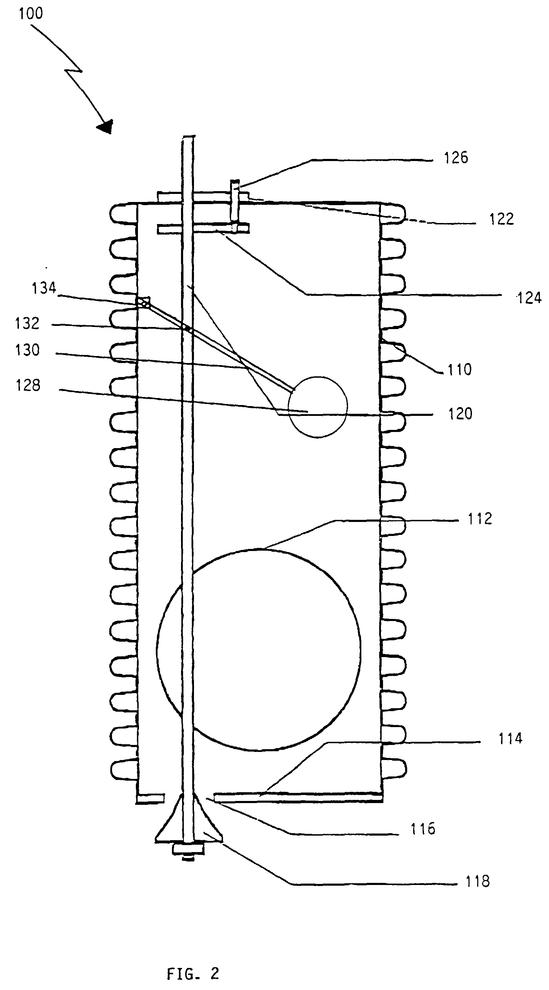

Die Ausfühzungsform gemäß Fig. 2 läßt prinzipiell eine vergleichbare Versickerungseinrichtung bzw. Anstauregelorgan 100 erkennen, wie sie in Fig. 1 als Versickerungseinrichtung 10 wiedergegeben ist. Abweichend von der in Fig. 1 dargestellten Ausführungsform ist bei der in Fig. 2 dargestellten Ausführungsform jedoch eine automatisierte Regulierung für ein Verschlußglied, hier einen Verschlußkegel 118, vorgesehen, der einen Abfluß 116 verschließt bzw. freigibt.

An einer Stange 120 greift über ein Drehgelenk 132 ein Hebelarm bzw. eine Schwinge 130 an, die auf der einen Seite über ein weiteres Drehgelenk 134 an der Wandung des Behälters 110 dieser Ausführungsform 100 einer erfindungsgemäßen Versickerungseinrichtung befestigt ist. Auf der anderen Seite ist ein Schimmkörper 128 vorgesehen. Wenn nun der Wasserstand in dem Behälter 110 steigt, wird die in dem Widerlager 122 geführte Stange 120 nach oben verschoben, wodurch der Verschlußkegel 118 weiter in den Abfluß 116 eingeführt wird. Das heißt, mit zunehmendem Wasserstand wird der freie Strömungsquerschnitt des Abflusses 116 verringert, so daß das in einem Speichervolumen angestaute Wasser langsamer in eine Kanalisation abgegeben werden kann, so daß aus dem entsprechend präparierten Sammelbehältnis bzw. -volumen mehr Niederschlagswasser bzw. sauberes Wasser kontrolliert in dem Erduntergrund versickern kann.

Der Anlenkpunkt 132 an der Stange 120 sollte in dem Hebel 130 natürlich in einem Langloch geführt sein, um die Bewegung des Hebels 130 ausgleichen zu können.

Sinkt der Wasserstand in dem Behälter 110 der Versickerungseinrichtung 100 ab, so fällt damit auch die Schwimmeinrichtung 128 in ihrem Höhenniveau ab und drückt über den Anlenkpunkt bzw. das Drehgelenk 132 nach unten, wodurch der Verschlußkegel 118 aus dem Abfluß 116 herausgedrückt wird, um den freien Strömungsquerschnitt des Abflusses 116 wieder zu vergrößern. Ein Anzeigestift 126, der von außerhalb der Versickerungseinrichtung 100 erkennbar sein sollte, kann zur Überprüfung der regulären Funktion der erfindungsgemäß ausgebildeten Versickerungseinrichtung beobachtet werden. Natürlich kann die oben aus dem Behälter 110 herausragende Stange selbst auch als Anzeigeeinrichtung verwendet werden, wobei jedoch am oberen Ende der Stange bevorzugt noch ein Gegenwiderlager (nicht dargestellt) vorgesehen sein sollte, um eine Belastung des Hebels 130 zu vermeiden, wenn kein oder wenig Wasser in dem Behälter 110 enthalten ist und die Stange 120 mit dem Verschlußkegel 118 maximal abgesenkt ist. In diesem Fall würde ansonsten das Gesamtgewicht der Anordnung aus den Bestandteilen 118, 120, 124, 126 an dem Drehgelenk 132 angreifen.

Eine vorhandene Anzeige 126 kann darüber hinaus so ausgebildet sein, daß sie auf örtliche Gegebenheiten, d.h. geographisch charakteristische Niederschlagsmengen, Schneeschmelzen etc., abgestimmt Anzeigen in Form von Markierungen, Kerbungen oder dergleichen erhält. Auch könnte die Anzeige 126 entsprechend dem jeweiligen Untergrund, beispielsweise lehmigen Böden, Kiesböden oder dergleichen, mit Markierungen versehen werden.

Es ist darüber hinaus auch möglich, die automatische Regelung 128 bis 134 an entsprechende geographische Niederschlagscharakteristiken anzupassen, indem beispielsweise ein Führungsgestänge vorgesehen wird, das etwa über ein Scherengestänge auf die Stange 120 einwirkt, wobei die Anlenkung der Stange 120 entsprechend den Charakteristiken eines jeweiligen geographischen Standortes weiter entfernte Anlenkpunkte in Bezug auf die Stange oder dichter beieinander angeordnete Anlenkpunkte umfaßt.

Die dargestellten Ausführungsformen 10, 100 sind in der Lage, das aus Niederschlägen und Schneeschmelze anfallende Wasser zurückzuhalten und versickern zu lassen.

Ein Verwendungsbeispiel weist eine begrünte Versickerungsmulde und eine darunter liegende Kiesrigole mit einem Verteiler-/Sammelrohr und einer erfindungsgemäßen Einrichtung 10, 100 auf.

Die Kiesrigole (nicht darstellt) ist mit einem groben Kies gefüllt und kann mit einem Geotextil ummantelt sein. Eingebettet in der Kiesrigole liegt das Verteiler-/Sammel rohr.

Das Niederschlagswasser wird in der Versickerungsmulde gespeichert, bevor es, gefiltert durch eine Vegetationsschicht, zur Kiesrigole gelangt. Dort verteilt es sich gleichmäßig in den Hohlräumen des Kieses und wird dann in einem Sickerrohr kontrolliert weitergeleitet.

Im Falle ausreichender Durchlässigkeit des Bodens erfolgt von der Kiesrigole aus eine vollständige Versickerung in den Untergrund. Bei geringerer Durchlässigkeit oder hohem Wasserzudrang findet nur eine Teilversickerung statt. Das restliche Wasser wird im Rohr und Kies gespeichert und über das Rohr und einen Schacht, in den die erfindungsgemäße Einrichtung eingesetzt sein kann, gedrosselt in die nächste Rigole, bzw. nach der letzten Rigole in einen Vorfluter zeitverzögert abgegeben, so daß mehr Wasser versickern kann.

Durch die Erfindung wird das Niederschlagswasser kontrolliert aus einer Kiesrigole beispielsweise in den Vorfluter in Abhängigkeit von der Anstauhöhe abgegeben. Die Durchflußmenge kann bei einer Anstauhöhe von 0,3 - 2,0 m mit einer Durchflußmenge von 0,1 bis 10 l/s geregelt werden.

## Patentansprüche

1. Versickerungseinrichtung bzw. Anstauregelorgan mit einem Behälter (10, 110) mit einem Zulauf (12, 112), gegebenenfalls einem Überlauf und einem Abfluß (16, 116), wobei der freie Strömungsquerschnitt des Ablaufs veränderbar ist, dadurch **gekennzeichnet**, daß eine Stelleinrichtung (20, 120) zwischen dem Abfluß und einem oberen Bereich des Behälters (10, 110) angeordnet ist, wobei die Stelleinrichtung (20, 120) in Verbindung zu einem Regelorgan (18, 118) bzw. Verschlußglied zur Veränderung des Strömungsquerschnittes steht.

2. Versickerungseinrichtung nach Anspruch 1, dadurch **gekennzeichnet**, daß am oberen Bereich des Behälters ein Stellelement (36) vorgesehen ist, das mit der Stelleirrichtung (20, 120) verbunden ist, um auf das Regelorgan einzuwirken, wobei insbesondere mit dem Stellelement (36) bzw. der Stelleinrichtung (20, 120) eine Anzeigeeinrichtung (26, 126) verbunden ist, die eine zum Strömungsquerschnitt des Abflusses (16, 116) proportionale Anzeige hat.

3. Versickerungseinrichtung nach einem der Ansprüche 1 bis 3, dadurch **gekennzeichnet**, daß der Abfluß (16, 116) am Boden (14, 114) des Behälters vorgesehen ist, wobei bevorzugt das Regelorgan (18, 118) einen zunehmenden bzw. abnehmenden Umfang hat, insbesondere kegel- oder trapezförmig ist.

4. Versickerungseinrichtung nach einem der Ansprüche 1 bis 4, dadurch **gekennzeichnet**, däß das Regelorgan eine Platte aufweist, die durch Betätigen des Stellelements (36) ganz oder teilweise vor den Abfluß (16, 116) versetzbar ist, um dessen freien Strömungsquerschnitt einzustellen.

5. Versickerungseinrichtung nach einem der Ansprüche 1 bis 3, dadurch **gekennzeichnet**, daß der Abfluß (16, 116) in der Wand im unteren Bereich des Behälters (10, 110) angeordnet ist, wobei insbesondere das Regelorgan bzw. Verschlußglied ein Sperrschieber ist.

6. Versickerungseinrichtung nach einem der Ansprüche 1, 2 oder 5, dadurch **gekennzeichnet**, daß der Abfluß (16, 116) wenigstens einen kleinen Abstand zum Boden (14, 114) des Behälters (10, 110) hat.

7. Versickerungseinrichtung nach einem der Ansprüche 1 bis 6, dadurch **gekennzeichnet**, daß die Stelleinrichtung (20, 120) eine Stange, ein Seil oder dergleichen ist.

8. Versickerungseinrichtung nach einem der Ansprüche 1 bis 7, dadurch **gekennzeichnet**, daß die Stelleinrichtung an einem Regelabschnitt (128, 130, 132, 134) angeschlossen ist, um die Stellung des Regelorgans bzw. Verschlußgliedes (18, 118) entsprechend dem Wasserstand im Behälter (10, 110) zu verändern.

9. Versickerungseinrichtung nach Anspruch 11, dadurch **gekennzeichnet**, daß der Regelabschnitt einen Schwimmkörper (128) aufweist, der an der Stelleinrichtung (20, 120) angreift und diese entsprechend dem Wasserstand im Behälter (10, 110) bewegt, um das Regelorgan (18, 118) in seiner Stellung in oder an dem Abfluß (16, 116) zu verändern, um dessen freien Strömungsquerschnitt einzustellen, und bevorzugt der Schwimmkörper (128) über einen an der Stelleinrichtung (20, 120) angreifenden Hebel (130), eine Schwinge oder dergleichen, oder unmittelbar an der Stelleinrichtung angreift.

10. Versickerungseinrichtung nach einem der Ansprüche 1 bis 9, dadurch **gekennzeichnet**, daß ein Schacht vorgesehen ist, in den die Versickerungseinrichtung (10, 110) in einer vorgebbaren Höhe angeordnet ist, wobei der Zulauf des Schachtes dem Abfluß (16, 116) der Versickerungseinrichtung (10, 110) entspricht, wobei bevorzugt der Behälter (10, 110) ein Kunststoffwellrohr, vorzugsweise mit glatter Innenwand, ist, wobei insbesondere der Schacht ein Kunststoffwellrohr mit vorzugsweise glatter Innenwand ist, und gegebenenfalls vor bzw. in dem Zulauf der Versickerungseinrichtung ein Filter angeordnet ist, bzw. vorzugsweise der Behälter (10, 110) einen Überlauf aufweist, der z. B. am oberen Abschnitt des Behälters ausmündet.
